Europäisches Patentamt

European Patent Office

Office européen des brevets

(11) Publication number: **0 049 961**
**B1**

(12) **EUROPEAN PATENT SPECIFICATION**

(45) Date of publication of patent specification: **10.06.87**

(21) Application number: **81304290.0**

(22) Date of filing: **17.09.81**

(51) Int. Cl.⁴: **B 60 K 23/08**

(54) Transmission system for a four-wheel drive vehicle.

(30) Priority: **09.10.80 JP 142260/80**

(43) Date of publication of application:
**21.04.82 Bulletin 82/16**

(45) Publication of the grant of the patent:
**10.06.87 Bulletin 87/24**

(84) Designated Contracting States:
**CH DE FR GB LI SE**

(56) References cited:
**EP-A-0 039 069**
**DE-C-1 026 180**

(73) Proprietor: **FUJI JUKOGYO KABUSHIKI KAISHA**
**7-2 Nishishinjuku 1-chome Shinjuku-ku**
**Tokyo (JP)**

(72) Inventor: **Kageyama, Hayashi**
**28-14, Hachimancho Ohta-shi**
**Gunma-Pref. (JP)**

(74) Representative: **Kirk, Geoffrey Thomas et al**
**BATCHELLOR, KIRK & EYLES 2 Pear Tree Court**
**Farringdon Road**
**London EC1R 0DS (GB)**

Courier Press, Leamington Spa, England.

**Description**

The present invention relates to a transmission system for a vehicle driven by an internal combustion engine for optionally transmitting the drive to one pair or to two pairs of driving wheels.

Sudden braking of a two-wheel drive vehicle may cause dangerous skidding, caused by locking of wheels. In a four-wheel drive vehicle, since the front wheels and the rear wheels are coupled to one another through the propeller shaft, locking of only one pair of wheels is impossible. Therefore, skidding of only the front wheels or only the rear wheels does not occur. A four-wheel drive vehicle thus has safer braking and more stable steering.

It is known from DE—C—1 026 180 to convert from 2 to 4 wheel drive on braking. In DE—C— 1 026 180 a dog clutch is used to connect a secondary pair of wheels to the main transmission on braking. Features from DE—C— 1 026 180 are included in the precharacterising part of claim 1, of the claims appended hereto.

According to the present invention, a transmission system for a vehicle driven by an internal combustion engine, including a transmission for transmitting drive power to a first pair of vehicle wheels, a clutch for selectively transmitting power to a second pair of vehicle wheels, selection means for effecting engagement of the clutch, by generating a signal for the engagement of the clutch, means for generating a brake signal on depression of the vehicle brake, and a control circuit responsive to the brake signal for automatically engaging the clutch and thereby establishing four-wheel drive, characterised in that the clutch is an electromagnetic slip clutch and the brake signal is generated by the means on a predetermined depression of the brake.

The invention includes a vehicle having a transmission system as described above.

The invention will be more readily understood by way of example from the following description of a vehicle transmission system in accordance therewith, reference being made to the accompanying drawings, in which:

Figure 1 is a diagrammatic cross-sectional view of the system and

Figure 2 is a block diagram of a control circuit for the system.

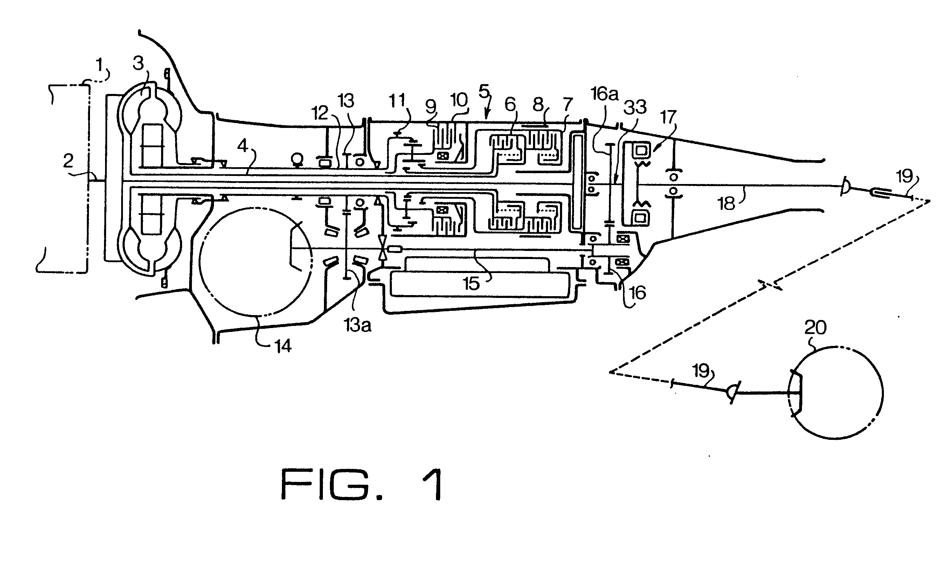

In Figure 1, numeral 1 generally designates an internal combustion engine having a crankshaft 2. The crankshaft 2 is connected to a trans-axle type transmission for driving front-wheels, which comprises a torque converter 3, an automatic transmission device 5 having an input shaft 4 connected to the torque converter. The automatic transmission comprises clutches 6, 7, a brake band 8, a brake 9, a one-way clutch 10 and a planetary gear 11. An output shaft 12 connected to the planetary gear 11 is connected through reduction gears 13, 13a to a final reduction gear 14 which is connected to front wheels. Gear 13a is carried on shaft 15, which extends rearwardly and which, at the rear end, has a gear 16 secured to it.

Gear 16 meshes with a gear 16a which is connected through shaft 33 to an electromagnetic powder clutch 17 for selectively transmitting power to the rear wheels. The electromagnetic clutch 17 is connected to a final reduction gear 20 for the rear wheels through a shaft 18 and propellor shaft 19.

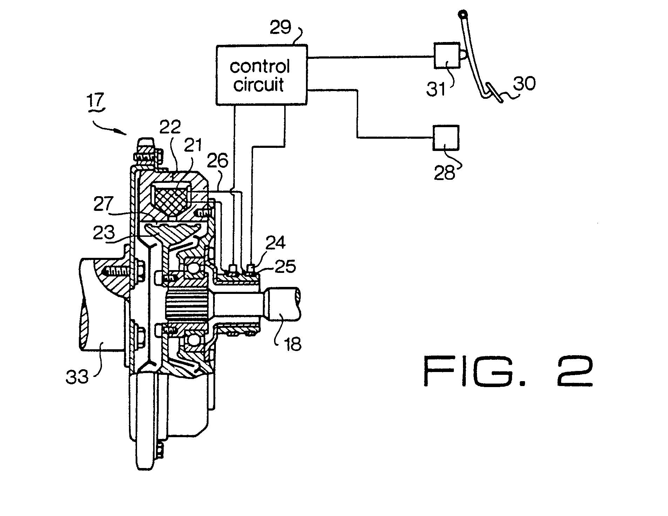

Referring to Figure 2, the electromagnetic powder clutch 17 comprises a drive member 22 connected to the shaft 33, a magnetizing coil 21 provided in the drive member 22, a driven member 23 secured to the shaft 18, and magnetic powder provided in the clutch. Clutch current flows from a control circuit 29 to magnetizing coil 21 through brushes 24, slip rings 25 and lead 26.

When the magnetizing coil 21 is excited, the magnetic powder is aggregated in the space 27 between the inner surface of the driving member 22 and the peripheral surface of the driven member 23. Thus, the clutch is engaged through the magnetic powder.

A selection switch 28 is connected to the control circuit 29 for engaging and disengaging the clutch 17. Further, a brake switch 31 is mounted adjacent to a brake pedal 30 so as to operate when pedal 30 is depressed a predetermined stroke. A switch operated by the brake oil pressure may be used in place of the brake pedal-operated switch 31. The brake switch 31 is connected and when operated generates a brake signal to the control circuit 29. The control circuit 29 comprises switch means (not shown) which is adapted to close the circuit of the magnetizing coil 21 to excite the coil 21, when either the selection switch 28 or the brake switch 31 is closed.

In operation, when the selection switch 28 is in the position for selecting front wheel drive (the switch open position), the circuit for the magnetizing coil 21 in the control circuit 29 is opened. The electromagnetic clutch 17 is disengaged and hence the vehicle is driven by the front wheels only. If the selection switch 28 is operated for selecting four-wheel drive, control circuit 29 operates to close the circuit for the magnetizing coil 21 and to excite the coil. Thus, the power from the crankshaft 2 is also transmitted to the rear wheels through gears 16, 16a, electromagnetic clutch 17 and propeller shaft 19, establishing four-wheel drive.

When the brake pedal 30 is depressed a predetermined stroke under the two-wheel drive conditions, the operation of the brake switch 31 causes the control circuit 29 to close the circuit for the magnetizing coil. Thus, the power transmitting ·system of the vehicle is automatically changed to four-wheel drive.

Two-wheel drive is thus automatically changed to four-wheel drive automatically when a predetermined degree of braking is applied. As a result the risk of slip and skidding of the wheels is reduced and the safer steering of four-wheel drive achieved. It will be understood that a manual transmission may be used instead of the illustrated automatic transmission.

## Claims

1. A transmission system for a vehicle driven by an internal combustion engine, including a transmission (5, 13, 14) for transmitting drive power to a first pair of vehicle wheels, a clutch (17) for selectively transmitting power to a second pair of vehicle wheels, selection means (28) for effecting engagement of the clutch (17), by generating a signal for the engagement of the clutch, means (31) for generating a brake signal on depression of the vehicle brake (30), and a control circuit (29) responsive to the brake signal for automatically engaging the clutch (17) and thereby establishing four-wheel drive, characterised in that the clutch (17) is an electromagnetic slip clutch and the brake signal is generated by the means (31) on a predetermined depression of the brake.

2. A vehicle transmission system as claimed in claim 1, in which the transmission is an automatic transmission.

3. A vehicle having an internal combustion engine, two pairs of drive wheels, and a transmission system as claimed in any one of the preceding claims for transmitting drive from the engine optionally to one or both pairs of drive wheels.

## Patentansprüche

1. Kraftübertragungsvorrichtung für ein von einer Verbrennungsmaschine angetriebenes Fahrzeug, mit einer Transmissionsstrecke (5, 13, 14) zur Übertragung der Antriebskraft auf ein erstes Fahrzeugräderpaar; einer wahlweise die Kraftübertragung auf ein zweites Fahrzeugräderpaar vornehmenden Kupplung (17); Auswahlmittel (28) zum Bewirken des Einkuppelns der Kupplung (17) durch Erzeugung eines Signals zum Einkuppeln der Kupplung; Mittel (31) zur Erzeugung eines Bremssignals bei Betätigung der Fahrzeugbremse (30); und mit einer auf das Bremssignal ansprechenden Steuerschaltung (29), die das automatische Eingreifen der Kupplung (17) und damit das Einsetzen des Vier-Rad-Antriebes bewirkt; dadurch gekennzeichnet, daß die Kupplung (17) als elektromagnetische Rutschkupplung ausgebildet ist, und daß das Bremssignal durch Mittel (31) bei Ausübung eines vorbestimmten Bremsdruckes erzeugt wird.

2. Kraftübertragungsvorrichtung nach Anspruch 1 oder Anspruch 2, dadurch gekennzeichnet, daß die Transmissionstrecke als automatisches Getriebe ausgebildet ist.

3. Fahzeug mit einer Verbrennungsmaschine, zwei Antriebsräderpaaren und einer Kraftübertragungsvorrichtung nach einem der vorhergehenden Ansprüche zur Kraftübertragung von der Maschine wahlweise auf das eine Paar oder beide Paare der Antriebsräder.

## Revendications

1. Dispositif de transmission pour un véhicule mû par un moteur à combustion interne incluant une transmission (5, 13, 14) pour transmettre une certaine énergie à une première paire de roues du véhicule, un accouplement (17) pour transmettre sélectivement de l'énergie à une seconde paire de roues du véhicule, des moyens de sélection (28) pour effecteur l'application de l'accouplement (17) en engendrant un signal l'application de l'accouplement, des moyens (31) pour engrendrer un signal de frein lors de l'abaissment de la pédale de frein du véhicule (30) et un circuit de commande (29) qui, en réponse au signal de frein, applique automatiquement l'accouplement (17), et, ainsi, établit la marche à quatre roues motrices, caractérisé en ce que l'accouplement (17) est un accouplement électromagnétique à glissement, et en ce que le signal de frein est engendré par lesdits moyens (31) lors d'un abaissement prédéterminé de la pédale de frein.

2. Dispositif de transmission de véhicule selon la revendication 1, caractérisé en ce que la transmission est une transmission automatique.

3. Véhicule comportant un moteur à combustion interne, deux paires de roues motrices et un dispositif de transmission tel que spécifié dans l'une quelconque des revendications précédentes, pour transmettre l'énergie du moteur, à volonté soit à une seule paire de roues motrices, soit aux deux paires.

FIG. 1

0 049 961

FIG. 2